**Europäisches Patentamt**

**European Patent Office**

**Office européen des brevets**

(11) Numéro de publication: **0016911**
**A1**

(12) **DEMANDE DE BREVET EUROPEEN**

(21) Numéro de dépôt: **80100328.6**

(22) Date de dépôt: **23.01.80**

(51) Int. Cl.³: **G 02 B 7/26**

(30) Priorité: **28.03.79 US 24623**

(43) Date de publication de la demande: **15.10.80**
**Bulletin 80/21**

(84) Etats contractants désignés: **DE FR GB**

(71) Demandeur: **International Business Machines Corporation, Armonk, N.Y. 10504 (US)**

(72) Inventeur: **Stilwell, Jr. George Raymond, 11900 Coachman's Way, Raleigh, NC 27614 (US)**
Inventeur: **Uberbacher, Edward Charles, 8708 Cliff Top Ct., Raleigh, NC 27612 (US)**

(74) Mandataire: **Bonin, Jean-Jacques, COMPAGNIE IBM FRANCE Département de Propriété Industrielle, F-06610 La Gaude (FR)**

(54) **Connecteur tubulaire pour aligner deux éléments cylindriques, notamment pour aligner deux fibres optiques.**

(57) Le connecteur est composé de deux extrémités tubulaires coaxiales (12) et (14) entre lesquelles s'étendent des lamelles déformables (20). Au repos les lamelles (20) sont disposées longitudinalement et les deux fibres optiques à aligner (22) et (24) sont mises bout à bout à l'intérieur du connecteur. Ensuite, on fait subir aux extrémités (12) et (14) un mouvement de rotation en sens inverse, ce qui provoque une tension des lamelles et leur donne une configuration sensiblement hélicoïdale. Cette configuration a pour effet de rendre les fibres (22) et (24) coaxiales avec le connecteur et donc de les aligner.

EP 0016911 A1

1

CONNECTEUR TUBULAIRE POUR ALIGNER DEUX ELEMENTS
CYLINDRIQUES, NOTAMMENT POUR ALIGNER
DEUX FIBRES OPTIQUES

Description

Domaine technique

La présente invention concerne les fibres optiques, et, plus particulièrement, un connecteur tubulaire permettant d'aligner deux fibres optiques et de les connecter bout à bout.

Etat de la technique antérieure

L'emploi de fibres optiques dans le domaine du traitement des données et des communications présente un grand intérêt car ces fibres peuvent transporter un nombre d'informations beaucoup plus grand que les conducteurs électriques classiques.

L'un des problèmes que pose l'emploi de fibres optiques est celui de la réalisation de connexions présentant de faibles pertes entre fibres optiques ou entre une fibre et un détecteur de lumière. Alors que, dans le cas d'une connexion électrique classique, l'alignement des conducteurs que l'on connecte ne joue pas un rôle primordial, la connexion de deux fibres optiques ne peut en principe être réalisée qu'en les alignant selon un axe commun et en les plaçant bout à bout. Les fibres optiques actuelles présentent des dimensions extrêmement faibles, leur diamètre pouvant être de l'ordre de 250 microns, et il est de ce fait difficile de les aligner avec précision à l'intérieur d'un connecteur. Or, tout défaut d'alignement peut se traduire par une perte substantielle de l'intensité du signal au niveau du connecteur.

Divers types de connecteur ont été proposés afin de résoudre ce problème d'alignement des fibres. Dans l'un de ces connecteurs, les fibres sont placées dans des guides, par exemple dans des rainures en forme de V ou dans des ensembles de tiges parallèles, et sont maintenues en place par une plaque qui les recouvre. Dans un autre type connu de connecteur, les fibres optiques sont insérées dans les extrémités opposées du connecteur en traversant un matériau élastomère que l'on déforme ensuite, pour maintenir les fibres, en rapprochant l'une de l'autre des plaques de pression rigides disposées aux extrémités opposées dudit matériau.

Dans d'autres types de connecteur, l'alignement des fibres optiques est obtenu au moyen de tunnels formés avec précision ou d'une bande hélicoïdale d'un matériau élastique dont on entoure les fibres, préalablement mises bout à bout, afin de les maintenir en place.

D'une façon générale, les connecteurs connus de fibres optiques sont compliqués et trop coûteux. La plupart d'entre eux ne peuvent pas être utilisées pour connecter une fibre optique et un détecteur de lumière. Ils comportent généralement un volume d'un matériau qui entoure les fibres et qui les maintient dans la position requise. Les particules de poussière présentes dans le milieu dans lequel la connexion est effectuée peuvent se trouver piégées entre les fibres connectées et refléter ou absorber partiellement l'énergie optique, affaiblissant ainsi le signal au niveau du connecteur. Les connecteurs étant généralement d'un seul tenant, la suppression des particules de poussière est difficile.

3

## Exposé de l'invention

L'un des objets de la présente invention est donc de fournir un connecteur simple et peu onéreux dans lequel les particules de poussière peuvent être supprimées lorsqu'on effectue la connexion.

Le connecteur de l'invention est un dispositif tubulaire qui permet d'aligner et de connecter deux éléments tels que des fibres optiques que l'on a insérés dans ces extrémités opposées. Ces dernières sont tubulaires et reliées par un certain nombre de lamelles. Lorsqu'on fait subir aux extrémités des connecteurs deux rotations en sens inverse, les lamelles adoptent une configuration hélicoïdale qui permet d'aligner selon un axe longitudinal commun les éléments que l'on désire connecter.

D'autres objets, caractéristiques et avantages de la présente invention ressortiront mieux de l'exposé qui suit, fait en référence aux dessins annexés à ce texte, qui représentent un mode de réalisation préféré de celle-ci.

## Brève description des figures

La Figure 1 est une vue en perspective d'un connecteur tubulaire réalisé conformément à la présente invention.

La Figure 2 est une vue latérale du connecteur de l'invention et des fibres optiques insérées dans celui-ci lors de la phase initiale du processus de connexion.

La Figure 3 est une vue latérale du même connecteur une fois que l'on a fait subir à ses extrémités deux rotations en sens inverse afin d'aligner les fibres optiques insérées dans celui-ci.

4

La Figure 4 est une coupe prise selon la ligne 4-4 de la Figure 3.

La Figure 5 est une vue latérale du connecteur lorsque celui-ci est employé pour coupler une fibre optique et un détecteur de lumière.

Description de l'invention

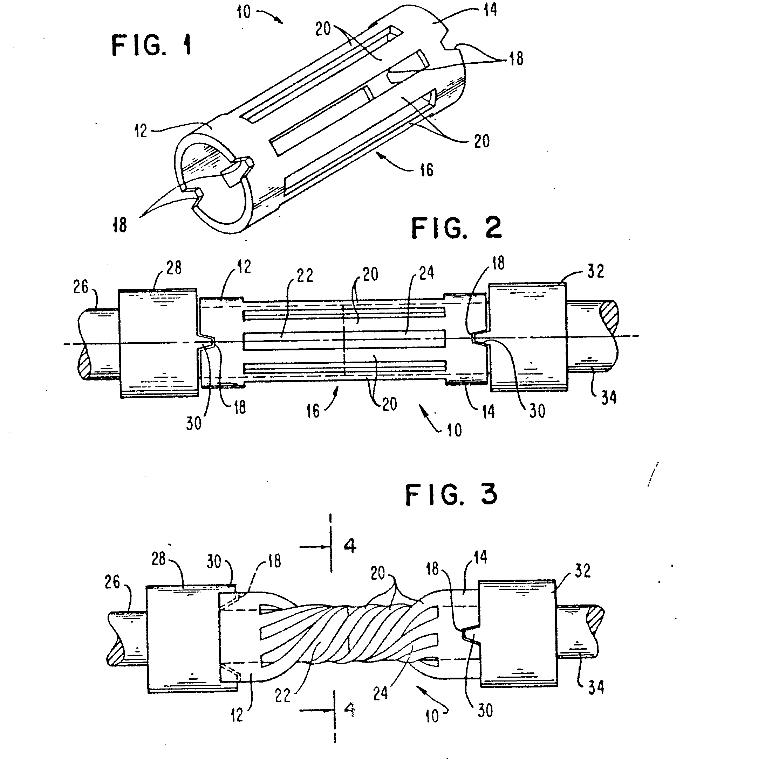

On a représenté sur la Figure 1 un connecteur tubulaire 10 réalisé conformément à la présente invention et qui comprend deux extrémités symétriques 12 et 14. Chacune de ces dernières possède de préférence une paroi circonférentielle pleine et comporte deux encoches diamétralement opposées 18, dont l'objet sera décrit plus loin.

La partie centrale 16 du connecteur tubulaire comporte un certain nombre d'évidements parallèles et longitudinaux, qui sont régulièrement espacés sur sa circonférence, les parties restantes ou lamelles 20, qui sont solidaires des extrémités 12 et 14, ressemblant aux barreaux d'une cage.

Comme le montre la Figure 2, le connecteur 10 peut être employé pour connecter les extrémités 22 et 24 d'une paire de fibres optiques identiques insérées dans les extrémités opposées du connecteur. Un revêtement protecteur 26 a été retiré de l'extrémité 22, mais non de la partie restante de la fibre optique. L'extrémité 22 traverse d'abord une bague 28 de forme cylindrique dont l'extrémité extérieure comporte des nervures complémentaires des encoches 18 que comporte l'extrémité 12 du connecteur tubulaire 10, et dont le diamètre intérieur est très voisin du diamètre extérieur de la fibre avec son revêtement protecteur 26. Un seule nervure 30 est visible sur la Figure 2, mais une autre nervure identique à celle-ci existe sur le côté opposé de l'élément 28. La seconde fibre optique peut être identique à la première, son extrémité dénudée 24 traversant d'abord une bague cylindrique 32 analogue à la bague 28 et entourant étroitement le revêtement protecteur 34 de la partie restante de cette fibre optique.

Comme le montre la figure, le diamètre intérieur initial du connecteur 10 est sensiblement plus grand que le diamètre extérieur des fibres optiques dénudées que l'on désire aligner. Pour réaliser l'alignement, on fait subir à l'une des extrémités 12 et 14 du connecteur une rotation ou l'on fait subir à ces deux extrémités deux rotations en sens inverse. Les extrémités 12 et 14 sont relativement rigides et ne sont pas déformées de façon importante à la suite de cette rotation. Toutefois, comme le montre la Figure 3, les différents éléments ou lamelles 20 de la partie centrale 16 du connecteur adoptent une configuration sensiblement hélicoïdale et exercent sur les extrémités 22 et 24 des fibres optiques des forces dirigées vers l'intérieur qui ont pour effet d'aligner ces fibres selon un axe longitudinal commun. La Figure 4 montre la façon dont chacun des éléments 20 porte contre l'extrémité 22 de l'une des fibres optiques et la contraint à se déplacer vers une position centrale.

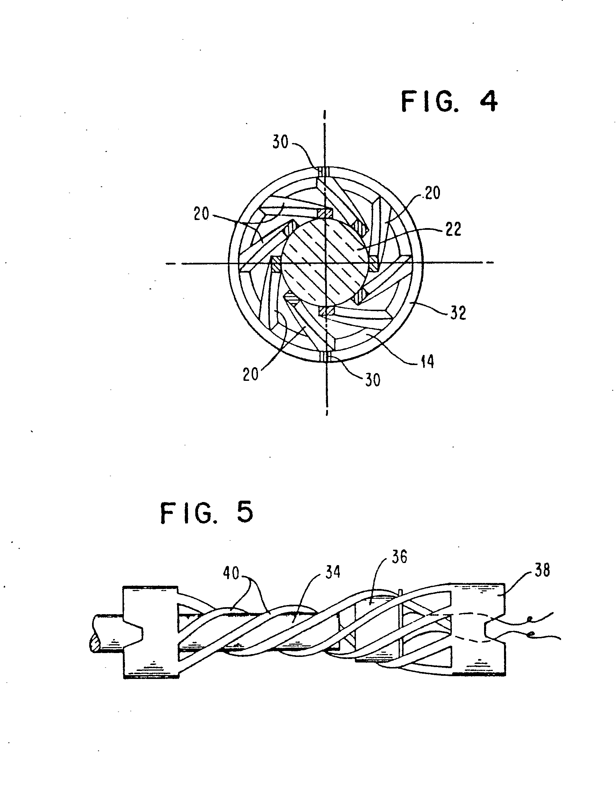

Le connecteur 10 peut également être utilisé pour connecter des composants dissemblables, par exemple, une fibre optique et un détecteur de lumière. Comme le montre la Figure 5, une fibre optique 34 et un détecteur de lumière 36 sont contraints de s'aligner selon un axe commun au centre d'un connecteur 38 par les éléments ou lamelles 40 de la partie centrale de celui-ci, qui adoptent une configuration hélicoïdale, cet alignement étant obtenu en dépit du fait que le diamètre du détec-

6

teur 36 est beaucoup plus grand que celui de la fibre optique 34.

Le connecteur tubulaire de la présente invention est de préférence constitué par un matériau capable de conserver sa configuration hélicoïdale une fois que ses extrémités ont cessé de faire l'objet d'une rotation. Des lamelles constituées par du phosphore et du bronze ou par du béryllium et du cuivre présentent les caractéristiques requises aux fins de la réalisation d'un connecteur métallique capable de conserver la forme qui lui a été impartie, c'est-à-dire sont flexibles mais non élastiques. Ces lamelles peuvent être solidaires des extrémités du connecteur ou fixées à ces dernières, que celles-ci soient constituées par le même matériau ou par un matériau différent. Le connecteur pourrait également être constitué par une matière plastique thermo-formable. Cette dernière serait exposée à une température élevée pendant qu'une rotation continuerait à être impartie aux extrémités du connecteur, lequel conserverait alors une configuration hélicoïdale après que ses extrémités ont cessé de faire l'objet d'une rotation.

Selon une autre solution possible, le connecteur de la présente invention pourrait être réalisé au moyen d'un matériau élastique incapable de conserver une configuration hélicoïdale après que ses extrémités ont cessé de faire l'objet d'une rotation. Un tel connecteur élastique ne pourrait être utilisé qu'en conjonction avec des flasques de couplage auxiliaires servant à maintenir les éléments de connexion en contact l'un avec l'autre une fois qu'une rotation leur a été impartie.

La partie centrale du connecteur étant ouverte et en

7

contact avec l'atmosphère, les particules de poussière qui se trouvent dans le voisinage des fibres optiques que l'on connecte peuvent être chassées du connecteur par le déplacement de l'air qui se produit lorsqu'une rotation est impartie à ses extrémités. A titre de précaution, l'utilisateur du connecteur peut procéder au nettoyage de ce dernier au moyen d'un aérosol avant ladite rotation.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

REVENDICATIONS

1.- Connecteur tubulaire pour aligner un premier et un second éléments cylindriques dont les extrémités se font face à l'intérieur dudit connecteur, caractérisé en ce qu'il comporte:

une première extrémité tubulaire cylindrique dont le diamètre intérieur est supérieur au diamètre extérieur de l'élément qu'elle entoure,

une seconde extrémité tubulaire cylindrique et coaxiale avec ladite première extrémité, dont le diamètre intérieur est supérieur au diamètre extérieur de l'élément qu'elle entoure, et

une pluralité de lamelles d'égales longueurs s'étendant entre lesdites première et seconde extrémités et réparties régulièrement sur le pourtour desdites extrémités de manière à former avec lesdites extrémités un corps de révolution, lesdites lamelles pouvant adopter une configuration sensiblement héliccïdale. lorsque lesdites extré-mités sont l'objet d'un mouvement de rotation relatif autour de leur axe commun, et amener ainsi les axes desdits premier et second éléments à coïncider avec l'axe commun desdites extrémités.

2.- Connecteur tubulaire selon la revendication 1, caractérisé en ce que lesdites lamelles sont constituées en un matériau capable de conserver ladite configuration à la fin dudit mouvement de rotation relatif.

3.- Connecteur tubulaire selon la revendication 1 ou 2, caractérisé en ce que lesdites extrémités et lesdites lamelles sont réalisées en une seule pièce.

4.- Connecteur tubulaire selon l'une quelconque des revendications précédentes, caractérisé en ce que les diamètres desdites extrémités sont identiques.

5.- Connecteur tubulaire selon l'une quelconque des revendications précédentes, caractérisé en ce que l'une au moins desdites extrémités comporte des encoches susceptibles de coopérer avec des nervures portées par une bague cylindrique entourant étroitement l'un desdits éléments cylindriques, de façon à transmettre à ladite extrémité tout mouvement de rotation imprimé à ladite bague.

6.- Connecteur tubulaire pour aligner deux fibres optiques conformes à l'une quelconque des revendications précédentes.

**FIG. 1**

**FIG. 2**

**FIG. 3**

FIG. 4

FIG. 5

## RAPPORT DÈ RECHERCHE EUROPEENNE

Office européen
des brevets

0016911
Numéro de la demande

EP 80 10 0328.6

## DOCUMENTS CONSIDERES COMME PERTINENTS

| Catégorie | Citation du document avec indication, en cas de besoin, des parties pertinentes | Revendication concernée |
|---|---|---|
| | US - A - 3 936 145 (R.L. McCARTNEY)<br>* revendications 1 à 8; fig. 3 *<br>-- | 1,2,<br>4-6 |
| | US - A - 4 087 157 (R.J. HODGES)<br>* fig. *<br>-- | 1 |
| A | US - A - 4 081 208 (R.A. MEADE)<br>* document entier *<br>-- | |
| A | GB - A - 1 511 988 (ITT INDUSTRIES)<br>* document entier *<br>---- | |

**CLASSEMENT DE LA DEMANDE (Int. Cl.3)**

G 02 B 7/26

**DOMAINES TECHNIQUES RECHERCHES (Int. Cl.3)**

G 02 B 7/26

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X Le présent rapport de recherche a été établi pour toutes les revendications

| Lieu de la recherche | Date d'achèvement de la recherche | Examinateur |
|---|---|---|
| Berlin | 08-07-1980 | FUCHS |

OEB Form 1503.1 06.78